(19) Europäisches Patentamt
European Patent Office
Office européen des brevets

(11) **EP 1 555 420 B1**

(12) **FASCICULE DE BREVET EUROPEEN**

(45) Date de publication et mention
de la délivrance du brevet:
**13.06.2007 Bulletin 2007/24**

(51) Int Cl.:
***F02K 9/58*** *(2006.01)*

(21) Numéro de dépôt: **04029376.3**

(22) Date de dépôt: **10.12.2004**

(54) **Procédé et dispositif pour optimiser la régulation de l'écoulement d'un fluide par adaptation de la perte de charge**

Prozess und Vorrichtung zur Optimierung der Strömungssteuerung einer Flüssigkeit durch Anpassung des Drukverlust

Process and apparatus for optimizing the flow regulation of a fluid by adapting the pressure drop

(84) Etats contractants désignés:
**AT BE BG CH CY CZ DE DK EE ES FI FR GB GR HU IE IS IT LI LT LU MC NL PL PT RO SE SI SK TR**

(30) Priorité: **23.12.2003 EP 03447307**

(43) Date de publication de la demande:
**20.07.2005 Bulletin 2005/29**

(73) Titulaire: **Techspace Aero S.A.**
**4041 Milmort (BE)**

(72) Inventeur: **Saint-Mard, Michel**
**4602 Vise (BE)**

(74) Mandataire: **pronovem**
**Office Van Malderen**
**Bld. de la Sauveniére 85/043**
**4000 Liège (BE)**

(56) Documents cités:
**EP-A- 1 108 929          DE-A- 4 425 345**
**US-A- 3 759 091          US-A- 4 161 307**
**US-A- 4 328 831          US-A- 5 054 521**
**US-A- 5 409 351**

EP 1 555 420 B1

**Description**

**Objet de l'invention**

La présente invention se rapporte à un procédé de régulation optimisée suivant le besoin de l'écoulement d'un fluide (débit ou pression) via sa perte de charge dans un système de grilles en rotation.

Le système décrit dans le présent document est prévu initialement pour une application dans des systèmes de propulsion de véhicule spatiaux, tels que moteurs de fusée. Toutefois cette application pourrait être utilisée dans tout autre système hydraulique nécessitant une régulation de fluide particulière.

L'invention se rapporte également au dispositif à grille mobile spécialement adapté pour la mise en oeuvre du procédé.

**Arrière-plan technologique et état de la technique**

Un dispositif de régulation de la perte de charge au moyen d'un système de grilles en rotation est connu et utilisé sur des moteurs de fusée.

Cependant, la fonction de ces équipements existants ne permet généralement une régulation que sur un domaine de perte de charge très faible.

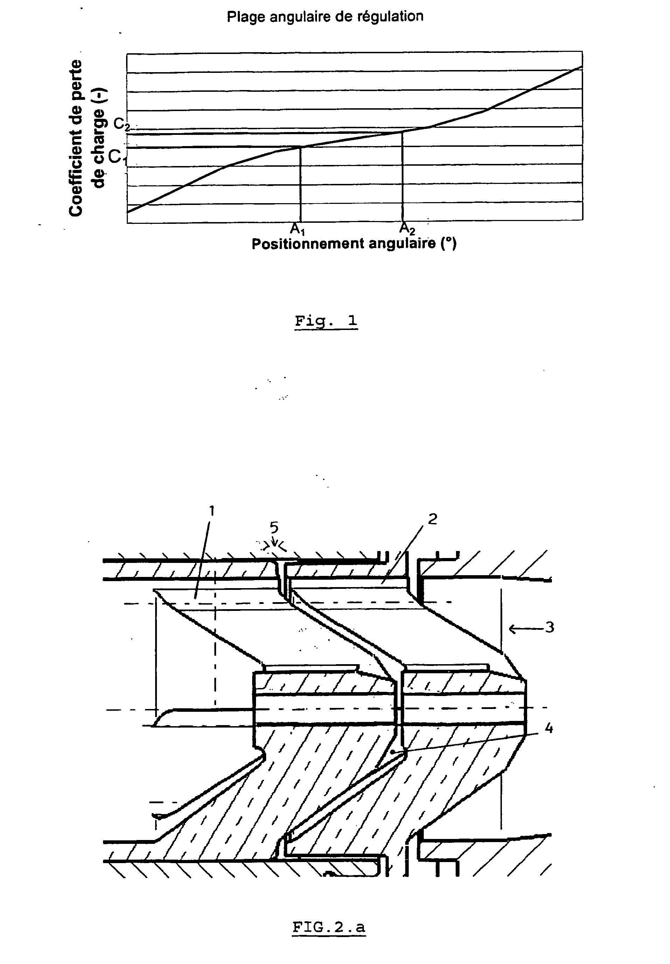

La figure 1 illustre un exemple de besoin de régulation qui correspond à une plage limitée de positions angulaires de l'équipement de régulation.

La caractéristique agissant sur la régulation du système comprenant l'équipement est, dans cet exemple, la perte de charge de l'écoulement, ramenée au coefficient de perte de charge singulière k défini comme :

$$k = 2\frac{\Delta P}{q^2}.\rho.s^2 \; ,$$

où $\Delta P$ est la différence de pression avant et après l'obstacle constitué par le système de grilles, q le débit massique, $\rho$ la masse volumique du fluide et s la section du conduit d'écoulement du fluide.

Le besoin du système à réguler se traduit par une variation de ce coefficient entre deux valeurs extrêmes C1 et C2.

Il y correspond une variation de la position angulaire de l'équipement de régulation entre A1 et A2. Toute position intermédiaire entre A1 et A2 doit être obtenue avec une précision suffisante. Cette précision doit être compatible avec le mécanisme de l'équipement de régulation.

Cette précision sera plus facilement atteinte si les variations du coefficient de perte de charge correspondent à une plage de variation progressive et régulière de la position angulaire, ce qui est le cas illustré par l'exemple.

Si l'on s'écarte de cette zone préférentielle par des angles supérieurs à A2 ou inférieurs à A1 , on obtiendra une régulation moins précise. L'imprécision du mécanisme induira des variations plus importantes du coefficient de perte de charge.

La demande de brevet européen EP-A-1 108 929 de la Demanderesse décrit une vanne de réglage de débit d'un fluide sous pression comprenant un obturateur mobile, sous forme d'une grille rotative, commandé par un actionneur, tous deux baignant dans le fluide, sans moyens d'étanchéité de la connexion de l'obturateur à l'actionneur. Le mouvement de la grille mobile est directement commandé par un moteur rotatif sans balais, dont le rotor est fixé précisément à la grille mobile. Par cette commande directe, le débit du fluide peut être réglé de manière précise et fiable. En utilisant un capteur de position, on peut ainsi connaître la position de l'obturateur au degré près. Donc, moyennant l'utilisation d'un actionneur spécialement étudié, on peut satisfaire le besoin de régulation qui est d'obtenir une haute précision de perte de charge.

Le document US-A-4,161,307 décrit une vanne pour la régulation de l'écoulement d'un fluide, comprenant un corps de vanne avec une entrée et une sortie coaxiales, ainsi qu'un élément d'obturation pivotant. Celui-ci possède un orifice qui coïncide avec la sortie, lorsque la vanne est en position ouverte et une paroi flexible couvrant la sortie, lorsque la vanne est en position fermée. L'élément d'obturation peut être pourvu de rainures espacées à sa périphérie, de manière telle que la surface de passage du fluide varie de manière continue avec la rotation de l'élément d'obturation. Par un choix judicieux de la taille et de la forme de l'orifice et des rainures, une relation linéaire flux/rotation peut être obtenue pour une perte de charge constante à travers la vanne.

2

## Buts de l'invention

La présente invention vise à fournir une solution qui permette de s'affranchir des inconvénients de l'état de la technique.

En particulier, l'invention a pour but de s'adapter à différentes lois de variation de perte de charge en fonction du besoin de régulation (comme par exemple la recherche d'une haute précision), et ce quelque soit le type d'actionneur utilisé.

## Principaux éléments caractéristiques de l'invention

Un premier objet de la présente invention se rapporte à un procédé de régulation de l'écoulement d'un fluide, en particulier du débit ou de la pression du fluide, par ajustement de sa perte de charge dans un dispositif hydraulique ou pneumatique, via un obturateur à grilles ou équivalent localisé entre une zone amont et une zone aval du dispositif, présentant une grille fixe et une grille mobile rotative localisable selon un angle de rotation par rapport à la grille fixe, caractérisé en ce que l'on détermine une loi de régulation donnée pour le dispositif, c'est-à-dire une loi de variation du coefficient de perte de charge en fonction dudit angle dans une plage angulaire donnée, par le choix préalable de la forme de la lumière dudit obturateur, indépendamment de l'actionneur utilisé pour l'ajustement effectif de la perte de charge.

De préférence, la forme de la partie obturante de la grille rotative est identique à la forme de la lumière de la grille fixe.

Dans le contexte de l'invention, la grille fixe et la grille mobile rotative de l'obturateur sont séparées par une certaine distance, dite distance inter-grilles, l'ensemble définissant une section hydraulique de passage frontale et une section hydraulique de passage transversale entre les deux grilles.

Avantageusement, la forme et la disposition des grilles est choisie pour obtenir une relation linéaire entre ledit angle et ladite section de passage frontale.

Selon une première modalité d'exécution préférée de l'invention, la forme de la lumière utilisée est choisie pour obtenir une relation du coefficient de perte de charge avec la position angulaire ou la section de passage frontale qui soit essentiellement de type polynomial.

Selon une deuxième modalité d'exécution préférée de l'invention, ladite relation est essentiellement parabolique.

Selon une troisième modalité d'exécution préférée de l'invention, ladite relation est essentiellement linéaire.

De préférence, l'obturateur est conformé pour permettre une régulation effectuée sur une plage angulaire de 60°, avec trois lumières de même forme décalées de 120°, ou sur une plage angulaire de 270°.

Avantageusement, la distance inter-grilles est choisie pour que la section frontale soit significativement plus grande que la section transversale sur la plage angulaire définie, la perte de charge étant essentiellement influencée par la position angulaire de la grille mobile.

Encore avantageusement, la distance inter-grilles est choisie pour que la section frontale soit du même ordre de grandeur que la section transversale sur la plage angulaire définie.

Encore avantageusement, la distance inter-grilles est choisie pour que la section frontale soit significativement plus petite que la section transversale sur la plage angulaire définie, la perte de charge étant principalement influencée par la distance inter-grilles.

Un deuxième objet de la présente invention concerne un dispositif de régulation de perte de charge d'un élément hydraulique ou pneumatique spécialement adapté pour la mise en oeuvre du procédé précité, comprenant un obturateur à grilles ou équivalent disposé dans le chemin d'écoulement du fluide, présentant une grille fixe et une grille mobile rotative localisable selon un angle de rotation par rapport à la grille fixe, caractérisé en ce que la forme de la lumière de l'obturateur à grilles est choisie pour obtenir en fonctionnement une loi de régulation prédéterminée, c'est-à-dire une loi de variation du coefficient de perte de charge en fonction dudit angle dans une plage angulaire donnée, indépendamment de l'actionneur utilisé pour l'ajustement effectif de la perte de charge.

Le procédé et le dispositif de régulation mis en oeuvre sont notamment destinés à la régulation d'un système hydraulique ou pneumatique dans un moteur de fusée.

## Brève description des figures

La figure 1, déjà mentionnée, représente schématiquement un exemple de besoin en régulation : perte de charge avec une grande précision demandée dans une plage angulaire déterminée.

La figure 2.a représente une vue en coupe dans un plan axial d'un exemple de dispositif à grille rotative, tel qu'utilisé dans le cadre de la présente invention

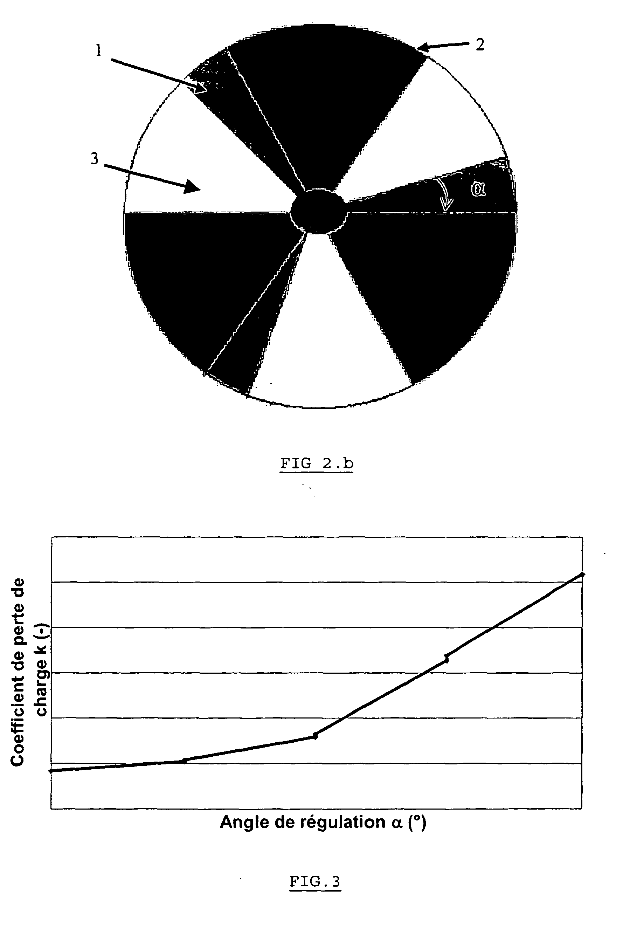

La figure 2.b représente schématiquement une vue en coupe transverse du dispositif de la figure 2.a.

La figure 3 représente schématiquement l'influence de la position angulaire sur la perte de charge, en utilisant le dispositif des figure 2.a et 2.b.

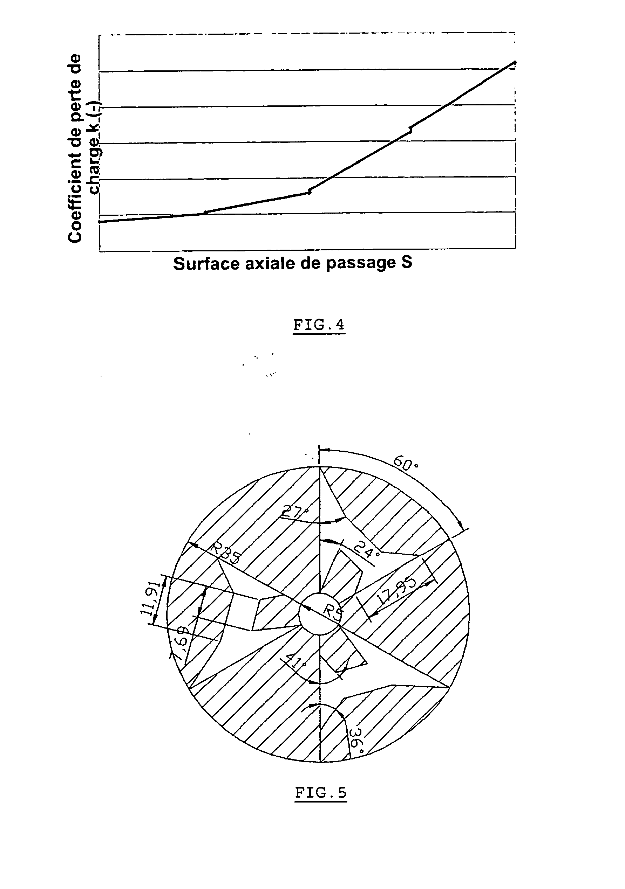

La figure 4 représente schématiquement l'influence de la surface frontale de passage du fluide sur la perte de charge, en utilisant le dispositif des figures 2.a et 2.b.

La figure 5 représente schématiquement un exemple de forme de grille mobile permettant d'obtenir une courbe de régulation du type de celle représentée sur la figure 1 (plage de régulation linéaire de 60°).

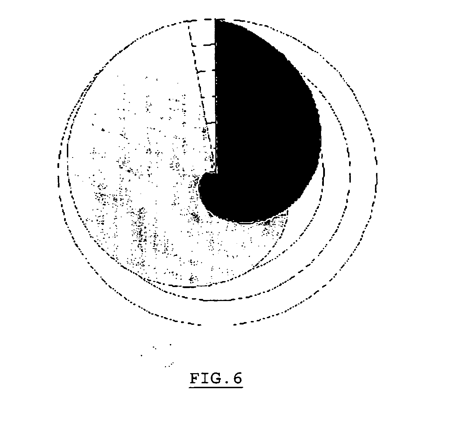

La figure 6 représente schématiquement une forme de grilles permettant de travailler sur une plage de régulation de 270°, avec une relation linéaire entre la perte de charge et la section frontale de passage.

## Description d'une forme d'exécution préférée de l'invention

### *Principe*

L'invention consiste à permettre la régulation via la perte de charge optimisée suivant le besoin pour tout ensemble hydraulique régulé. L'exemple présenté aux figures 2.a et 2.b comprend un système de deux grilles : une grille fixe 1 et une grille mobile 2.

La méthode originale décrite ci-après est destinée à optimiser la plage de variation progressive de la caractéristique souhaitée de l'équipement de régulation vis-à-vis du besoin de régulation imposé par le système. Dans le cas de l'exemple illustré sur la figure 1, cette optimisation est réalisée via la détermination de la géométrie idéale de l'obturateur de l'équipement.

### *Description technique*

Cette régulation via la perte de charge se fait en fonction du positionnement angulaire de la grille mobile.

Des essais ont montré que les courbes de perte de charge peuvent se partager en trois zones dans le cas d'une réalisation du type décrit dans les figures 2.a et 2.b. Dans ces figures, la position angulaire de la grille mobile par rapport à la grille fixe est définie par un angle $\alpha$. Par ailleurs, on appelle "section de passage" la section laissée libre pour l'écoulement par les grilles, la section de passage frontale correspondant à un débit dans le sens de l'écoulement principal dans le conduit et la section de passage transversale correspondant à un débit perpendiculaire à l'écoulement principal.

Les trois zones précitées sont :

I. zone d'influence de la position angulaire seule : dans cette zone, la section hydraulique de passage frontale 3 est significativement plus grande que la section de passage transversale 4, c'est-à-dire correspondant à un débit perpendiculaire à l'écoulement principal, disponible entre les deux grilles ;

II. zone d'influence intermédiaire : dans cette zone, les sections de passages frontale et transversale sont du même ordre de grandeur. Leurs influences sont donc du même ordre ;

III. zone d'influence de la distance inter-grilles 5 : dans cette zone, seule la section de passage transversale influence la perte de charge.

Connaissant ces trois types d'influences, il est possible de modifier la distance inter-grilles 5 de telle manière que l'on puisse majoritairement se trouver dans la zone I, II ou III.

Pour faire de la régulation sur la perte de charge, la zone la plus intéressante est la zone I puisqu'elle permet de faire un lien direct entre la position angulaire et la perte de charge pour des valeurs d'écoulement fixées (pression, débit, vitesse, etc.). La figure 3 montre un exemple de test réalisé avec le système à grille rotative présenté à la figure 2.

On peut donc corréler la perte de charge directement à la surface de passage puisque la forme des grilles est connue. Dans le cas de la géométrie définie dans le dispositif de la figure 2, la surface de passage frontale varie linéairement en fonction de l'angle. La figure 3 peut donc exprimer l'influence de la perte de charge directement liée à son principal paramètre en modifiant l'échelle de variation angulaire par une échelle exprimant la surface frontale disponible, comme le montre la figure 4. On voit donc que la variation de la perte de charge est directement liée à la loi de distribution de la section frontale de passage, ce qui revient à dire que modifier la géométrie des lumières de la grilles aura un impact direct sur la loi de perte de charge en fonction de la position angulaire.

On peut exprimer dès lors ces considérations sous forme mathématique. A titre d'exemple, on peut avoir le cas particulier suivant :

$$k = A \cdot \alpha^3 + B \cdot \alpha^2 + C \cdot \alpha + D \equiv f(\alpha) \qquad (1),$$

k étant le coefficient de perte de charge et $\alpha$ étant la valeur de l'angle.

Or, dans le cas présenté sur la figure 2,

$$S(\alpha) = E \cdot \alpha + F \qquad (2),$$

où S étant la valeur de la section frontale. Plus précisément, dans le cas de la figure 2, on a E = 3R, où R est le rayon de la grille et F est une constante qui représente la section de passage résiduelle lorsque la vanne est fermée.

On peut donc écrire :

$$k = A' \cdot S^3 + B' \cdot S^2 + C' \cdot S + D' \equiv g(S) \qquad (3),$$

ce qui fixe la loi de régulation. A, A', B, B', C, C', D et D' sont des constantes provenant du "lissage" de la courbe obtenue par essais.

Par des essais dans le cas de référence représenté sur la figure 2, il est possible d'obtenir un nombre infini de variations de perte de charge en fonction de la rotation angulaire. Ceci présente l'avantage de ne pas devoir contrôler de manière particulière la rotation de la grille, de mieux cibler le besoin (précision, stabilité d'un point de fonctionnement, etc.), tout en utilisant dans tous les cas de figure par exemple un contrôle linéaire de cette rotation plus simple à mettre en oeuvre et donc moins coûteux.

Il est donc possible de réaliser différents types de grilles afin d'adapter la loi de perte de charge à une plage de régulation donnée et avec une précision nominale donnée. Ci-dessous deux exemples de géométrie avec leurs fonctions sont indiqués.

- Régulation sur 60 degrés

La grille présentée sur la figure 2.b donne une variation de perte de charge parabolique en fonction de la position angulaire de la grille mobile, étant donné la loi de variation parabolique de la perte de charge en fonction de la section axiale de passage et la relation linéaire entre ladite section et l'angle.

Si on utilise alternativement la grille mobile représentée sur la figure 5 tout en conservant la grille fixe de la figure 2.b, on obtient une courbe de régulation où la perte de charge varie linéairement en fonction de l'angle sur toute la plage de fonctionnement.

- Régulation sur 270 degrés

On peut par ailleurs concevoir des formes de grilles permettant de travailler sur une plage de régulation plus étendue, par exemple de 270°, tout en assurant une relation linéaire de la perte de charge en fonction de la section de passage (voir figure 6). On notera que, dans le cas de la figure 6, le dessin est indicatif, car l'obturateur mobile doit avoir la même forme que la lumière dans la grille fixe.

La présente invention présente comme avantage le fait que le besoin en régulation peut être satisfait en modifiant la géométrie des grilles de l'obturateur et ce de façon quasi-indépendante de l'actionneur utilisé. Ainsi, par exemple, en utilisant un dessin de grilles adéquat, on peut obtenir une meilleure précision de perte de charge, pour un actionneur donné. Ceci implique la possibilité de simplification de l'actionnement de l'équipement, avec une réduction de coût.

L'invention permet également de cibler des zones de travail, en fonction du besoin rencontré, comme par exemple augmenter la précision de la perte de charge à un endroit particulier. Ce système permet en plus l'utilisation d'un même équipement où seul le dessin de la section de passage des grilles doit être modifié pour atteindre une autre fonctionnalité.

**Revendications**

1. Procédé de régulation de l'écoulement d'un fluide, en particulier du débit ou de la pression du fluide, par ajustement de sa perte de charge dans un dispositif hydraulique ou pneumatique, via un obturateur à grilles localisé entre une zone amont et une zone aval du dispositif, présentant une grille fixe (1) et une grille mobile rotative (2) localisable selon un angle de rotation ($\alpha$) par rapport à la grille fixe (1), **caractérisé en ce qu'** une loi de variation du coefficient de perte de charge est déterminée en fonction dudit angle [k = f($\alpha$)] dans une plage angulaire donnée par le choix préalable de la forme de la lumière dudit obturateur, indépendamment de l'actionneur utilisé pour l'ajustement effectif de la perte de charge.

**2.** Procédé selon la revendication 1, **caractérisé en ce que** la forme de la partie obturante de la grille rotative est identique à la forme de la lumière de la grille fixe.

**3.** Procédé selon la revendication 1 ou 2, **caractérisé en ce que** la grille fixe (1) et la grille mobile rotative (2) de l'obturateur sont séparées par une distance donnée, dite distance inter-grilles (5), l'ensemble définissant une section hydraulique de passage frontale (S, 3) et une section hydraulique de passage transversale (4) entre les deux grilles (1, 2), de manière telle qu'il existe une relation linéaire entre ledit angle ($\alpha$) et ladite section de passage frontale (S, 3).

**4.** Procédé selon la revendication 3, **caractérisé en ce que** la loi de variation du coefficient de perte de charge avec la position angulaire ($\alpha$) ou la section de passage frontale (S, 3) de l'obturateur à grilles est de type polynomial.

**5.** Procédé selon la revendication 4, **caractérisé en ce que** ladite loi de variation est parabolique.

**6.** Procédé selon la revendication 4, **caractérisé en ce que** ladite loi de variation est linéaire.

**7.** Procédé selon l'une quelconque des revendications précédentes, **caractérisé en ce que** l'obturateur est conformé pour permettre une régulation effectuée sur une plage angulaire de 60°, avec trois lumières de même forme décalées de 120°, ou sur une plage angulaire de 270°.

**8.** Dispositif de régulation de perte de charge d'un élément hydraulique ou pneumatique spécialement adapté pour la mise en oeuvre du procédé selon l'une quelconque des revendications précédentes, comprenant un obturateur à grilles ou équivalent disposé dans le chemin d'écoulement du fluide, présentant une grille fixe (1) et une grille mobile rotative (2) localisable selon un angle de rotation ($\alpha$) par rapport à la grille fixe (1), **caractérisé en ce que** la forme de la lumière de l'obturateur à grilles est choisie pour obtenir en fonctionnement une loi de variation du coefficient de perte de charge en fonction dudit angle [k = f($\alpha$)] dans une plage angulaire donnée, indépendamment de l'actionneur utilisé pour l'ajustement effectif de la perte de charge.

**9.** Dispositif selon la revendication 8, **caractérisé en ce que** les grilles (1, 2) sont configurées pour obtenir une relation linéaire entre ledit angle ($\alpha$) et ladite section de passage frontale (S, 3) de l'obturateur à grilles.

**10.** Dispositif selon la revendication 9, **caractérisé en ce que** la grille fixe (1) et la grille mobile (2) sont séparées par une distance inter-grilles (5) telle que la section frontale (3) soit plus grande que la section transversale (4) sur la plage angulaire définie.

**11.** Dispositif selon la revendication 9, **caractérisé en ce que** la grille fixe (1) et la grille mobile (2) sont séparées par une distance inter-grilles (5) telle que la section frontale (3) soit identique à la section transversale (4) sur la plage angulaire définie.

**12.** Dispositif selon la revendication 9, **caractérisé en ce que** la grille fixe (1) et la grille mobile (2) sont séparées par une distance inter-grilles (5) telle que la section frontale (3) soit plus petite que la section transversale (4) sur la plage angulaire définie.

**13.** Utilisation du dispositif selon l'une quelconque des revendications 8 à 12, pour la régulation d'un système hydraulique ou pneumatique dans un moteur de fusée.

**Claims**

**1.** Method for regulating the flow of a fluid, in particular of the flow rate or pressure of a fluid, by adjusting its loss of charge in a hydraulic or pneumatic device through a shutter with grilles positioned between a zone upstream and a zone downstream from the device, having a fixed grille (1) and a mobile rotary grille (2) that can be positioned at a rotation angle ($\alpha$) relative to the fixed grille (1), **characterised in that** a law of variation of the coefficient of loss of charge is determined as a function of said angle [k = f($\alpha$)] within a given angular range by the prior choice of the shape of the aperture in said shutter, independently of the actuator used for the actual adjustment of the loss of charge.

**EP 1 555 420 B1**

**2.** Method according to Claim 1, **characterised in that** the shape of the shutter part of the rotary grille is identical to the shape of the aperture in the fixed grille.

**3.** Method according to Claim 1 or 2, **characterised in that** the fixed grille (1) and the mobile rotary grille (2) of the shutter are separated by a given distance, called the inter-grille distance (5), the assembly defining a hydraulic section of forward flow (S,3) and a hydraulic section of transverse flow (4) between the two grilles (1,2), in such a way that there is a linear relationship between said angle (α) and said section of forward flow (S,3).

**4.** Method according to Claim 3, **characterised in that** the law of variation of the coefficient of loss of charge with the angular position (α) or the section of forward flow (S,3) of the shutter with grilles is of a polynomial type.

**5.** Method according to Claim 4, **characterised in that** said law of variation is parabolic.

**6.** Method according to Claim 4, **characterised in that** said law of variation is linear.

**7.** Method according to any one of the preceding claims, **characterised in that** the shutter is designed so as to allow a regulation over an angular range of 60°, with three apertures of the same shape spaced apart by 120°, or over an angular range of 270°.

**8.** Device for regulating the loss of charge of a hydraulic or pneumatic element especially adapted for implementing the process according to any one of the preceding claims, comprising a shutter with grilles or equivalent arranged in the path of the flow of the fluid, having a fixed grille (1) and a mobile rotary grille (2) that may be positioned at a rotation angle (α) relative to the fixed grille (1), **characterised in that** the shape of the aperture in the shutter with grilles is selected so as to obtain in operation a law of variation of the coefficient of loss of charge as a function of said angle [k = f(α)] ] in a given angular range, independently of the actuator used for the actual adjustment of the loss of charge.

**9.** Device according to Claim 8, **characterised in that** the grilles (1,2) are arranged so as to obtain a linear relationship between said angle (α) and said section of forward flow (S,3) of the shutter with grilles.

**10.** Device according to Claim 9, **characterised in that** the fixed grille (1) and the mobile grille (2) are separated by an inter-grille distance (5) such that the front section (3) is greater than the transverse section (4) over the defined angular range.

**11.** Device according to Claim 9, **characterised in that** the fixed grille (1) and the mobile grille (2) are separated by an inter-grille distance (5) such that the front section (3) is identical to the transverse section (4) over the defined angular range.

**12.** Device according to Claim 9, **characterised in that** the fixed grille (1) and the mobile grille (2) are separated by an inter-grille distance (5) such that the front section (3) is smaller than the transverse section (4) over the defined angular range.

**13.** Use of the device according to any one of Claims 8 to 12 for the regulation of a hydraulic or pneumatic system in a rocket engine.

**Patentansprüche**

**1.** Verfahren zur Regelung der Strömung einer Flüssigkeit, insbesondere des Durchsatzes oder des Drucks der Flüssigkeit, durch Anpassung seines Lastverlustes in einer hydraulischen oder pneumatischen Vorrichtung, durch einen Gitterverschluss, der sich in einem vor- oder nachgeschaltetem Bereich der Vorrichtung befindet und als festes Gitter (1) und als bewegliches, drehbares Gitter (2) ausgebildet ist, das entsprechend einem Drehwinkel (α) mit Bezug auf das feste Gitter (1) angeordnet werden kann, **dadurch gekennzeichnet, dass** man ein Gesetz zur Variation des Lastverlustkoeffizienten in Abhängigkeit des besagten Winkels [k = f(α)] in einem durch die vorherige Auswahl der Form des Durchlassbereiches des besagten Verschlusses gegebenen Winkelbereich bestimmt; dies erfolgt unabhängig vom verwendeten Stellglied für die effektive Anpassung des Lastverlustes.

**2.** Verfahren entsprechend Anspruch 1, **dadurch gekennzeichnet, dass** die Form des Verschlussbereiches des

7

drehbaren Gitters mit der Form des Durchlassbereiches des festen Gitters identisch ist.

3. Verfahren gemäß den Ansprüchen 1 oder 2, **dadurch gekennzeichnet, dass** das feste Gitter (1) und das bewegliche, drehbare Gitter (2) des Verschlusses durch einen gegebenen Abstand, genannt Zwischengitterabstand (5), getrennt werden; die gesamte Baugruppe definiert hierbei einen hydraulischen Abstand als frontalen Durchgang (S,3) sowie einen hydraulischen Abstand als in Querrichtung angeordneten Durchgang zwischen den beiden Gittern (1, 2); dies erfolgt in einer Weise, dass eine lineare Beziehung zwischen dem besagten Winkel ($\alpha$) und dem besagten Abschnitt als frontalem Durchgang (S,3) besteht.

4. Verfahren gemäß Anspruch 3, **dadurch gekennzeichnet, dass** das Gesetz über die Variation des Lastverlustkoeffizienten mit der Winkelposition ($\alpha$) bzw. dem Querschnitt des frontalen Durchgangs (S,3) des Verschlusses polynomisch erfolgt.

5. Verfahren gemäß Anspruch 4, **dadurch gekennzeichnet, dass** das besagte Variationsgesetz parabolisch ist.

6. Verfahren gemäß Anspruch 4, **dadurch gekennzeichnet, dass** das besagte Variationsgesetz linear ist.

7. Verfahren, gemäß einem der vorherigen Ansprüche, **dadurch gekennzeichnet, dass** der Verschluss, um eine effektive Regelung im Winkelbereich von 60° bzw. über einen Winkelbereich von 270° zu gestatten, mit drei gleichen, stufenweise um 120° versetzen Durchlassbereichen übereinstimmt.

8. Vorrichtung zur Regelung der Lastverluste eines hydraulischen oder pneumatischen Elements, das insbesondere für eine Umsetzung des Verfahrens gemäß einem der vorherigen Ansprüche geeignet ist, und die einen Gitter- oder ähnlichen Verschluss umfasst, der im Strömungsweg der Flüssigkeit angeordnet ist und als festes Gitter (1) sowie als bewegliches, drehbares Gitter (2) ausgebildet ist; dieses ist gemäß einem Drehwinkel ($\alpha$) mit Bezug auf das feste Gitter (1) angeordnet; die Vorrichtung ist **dadurch gekennzeichnet, dass** die Form des Durchlassbereiches des Gitterverschlusses so gewählt wird, dass während der Funktion ein Gesetz über die Variation des Lastverlustkoeffzienten in Abhängigkeit des besagten Winkels [k = f($\alpha$)] in einem gegebenen Winkelbereich erhalten wird; dies erfolgt unabhängig vom für die effektive Regelung des Lastverlustes verwendeten Stellglied.

9. Vorrichtung gemäß Anspruch 8, **dadurch gekennzeichnet, dass** die Gitter (1, 2) so gestaltet sind, dass sich eine lineare Beziehung zwischen dem besagten Winkel ($\alpha$) und besagten Abschnitt des frontalen Durchgangs (S, 3) des Gitterverschlusses ergibt.

10. Vorrichtung gemäß Anspruch 9, **dadurch gekennzeichnet, dass** das feste Gitter (1) und das bewegliche Gitter (2) durch einen Gitterzwischenabstand (5) getrennt sind, sodass der frontale Abschnitt (3) größer als der transversale Abschnitt (4) im definierten Winkelbereich ist.

11. Vorrichtung gemäß Anspruch 9, **dadurch gekennzeichnet, dass** das feste Gitter (1) und das bewegliche Gitter (2) durch einen Gitterzwischenabstand (5) getrennt werden, sodass der frontale Abschnitt (3) mit dem in Querrichtung liegenden Abschnitt (4) im definierten Winkelbereich identisch ist.

12. Vorrichtung gemäß Anspruch 9, **dadurch gekennzeichnet, dass** das feste Gitter (1) und das bewegliche Gitter (2) durch einen Gitterzwischenabstand (5) getrennt sind, sodass der frontale Abschnitt (3) kleiner als der in Querrichtung angeordnete Abschnitt (4) im definierten Winkelbereich ist.

13. Die Verwendung der Vorrichtung gemäß einem der vorherigen Ansprüche 8 bis 12 für die Regelung eines hydraulischen oder pneumatischen Systems in einem Triebwerk.

Plage angulaire de régulation

Fig. 1

FIG.2.a

FIG 2.b

FIG.3

FIG.4

FIG.5

FIG.6

**RÉFÉRENCES CITÉES DANS LA DESCRIPTION**

**Documents brevets cités dans la description**

- EP 1108929 A

- US 4161307 A